# EUROPEAN PATENT SPECIFICATION

(11) **EP 3 587 886 B1**
(45) Date of publication and mention of the grant of the patent: **04.11.2020**
(21) Application number: 18180806.4
(22) Date of filing: 29.06.2018
(51) Int. Cl.: F16L 37/138

(54) **QUICK COUPLING**
SCHNELLKUPPLUNG
COUPLAGE RAPIDE

(43) Date of publication of application: 01.01.2020
(73) Proprietor: ZhongShan QingYi Metal Products Enterprise Co., Ltd., ZhongShan City, Guangdong Province (CN)
(72) Inventor: Yu, Tang-Chieh, 414 Taichung City (TW)
(74) Representative: Cabinet Chaillot

(56) References cited:
- US-A1- 2008 238 087
- US-A1- 2010 295 292
- US-A1- 2011 121 561

## Description

### BACKGROUND OF THE INVENTION

### 1. Technical Field

The present invention relates to the structure of a quick coupling and more particularly to an improved quick coupling structure that can return a sleeve in the structure to its original position reliably and will not be easily damaged.

### 2. Description of Related Art

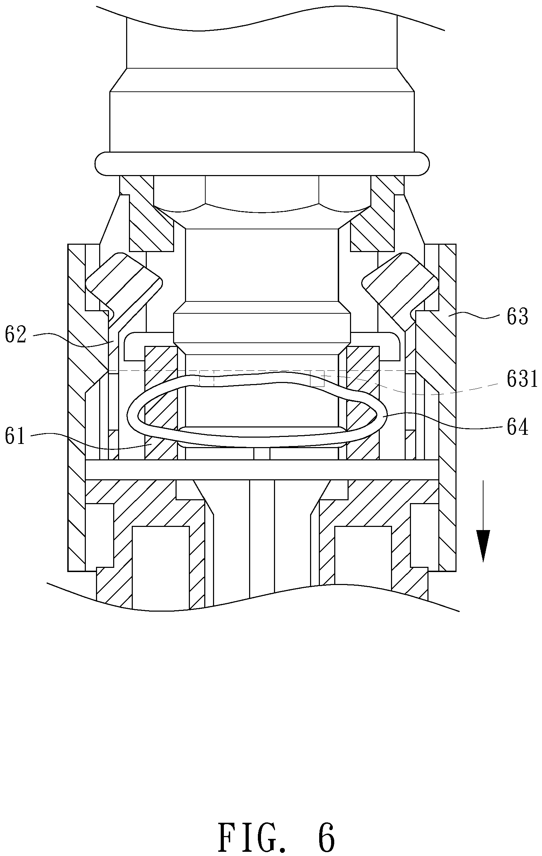

FIG. 6 shows a conventional quick coupling that is composed essentially of a main body 61, an elastic element 62, and a sleeve 63. The elastic element 62 is mounted between the main body 61 and the sleeve 63 and has a circular elastic ring 64. When the sleeve 63 is pressed downward, the protruding blocks 631 on the sleeve 63 push and thereby deform the elastic ring 64 such that the elastic ring 64 generates an elastic restoring force to restore the sleeve 63 in position. In practice, however, the circular elastic ring 64 tends to twist because of an uneven downward pressing force and thus become less effective in restoring the sleeve 63 in position.

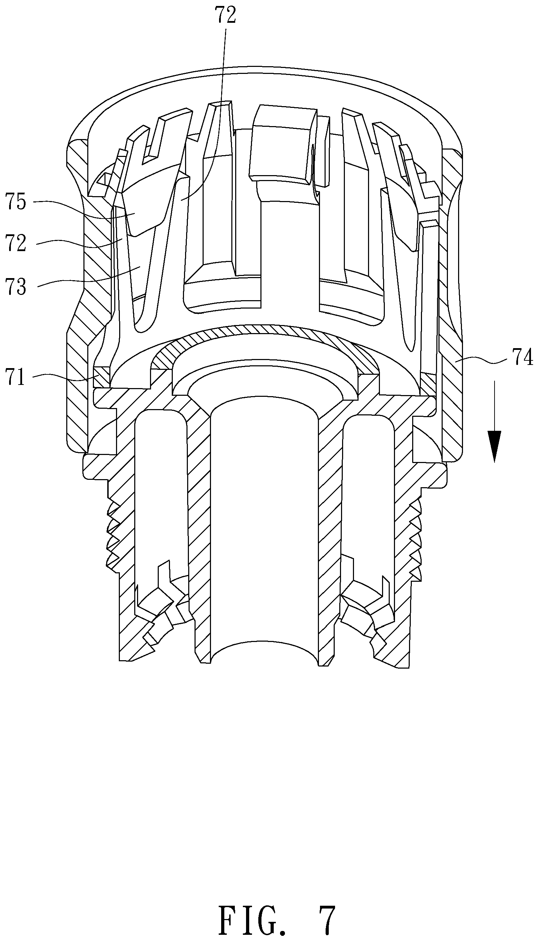

FIG. 7 shows the position restoration structure of another conventional quick coupling. Specifically, the elastic element 71 is provided with plural pairs of elastic legs 72, a deformable space 73 is formed between each pair of elastic legs 72, and the inner wall of the sleeve 74 is provided with a plurality of pushing blocks 75 corresponding respectively to the deformable spaces. When the sleeve 74 is pressed downward, each pushing block 75 on the sleeve 74 pushes the corresponding pair of elastic legs 72 such that the corresponding pair of elastic legs 72 are driven further apart from each other and generate an elastic restoring force to push the sleeve 74 upward to its original position. As each pushing block 75 pushes the corresponding pair of elastic legs 72 simultaneously, the downward pushing force of the former is distributed between the latter and thus leads to a reduced elastic restoring force. Moreover, when each pair of elastic legs 72 are deformed laterally outward by the pushing action of the corresponding pushing block 75, the free ends of each pair of elastic legs 72 are moved not only along the inner wall, or the inner circumference, of the sleeve 74, but also radially outward with respect to the sleeve 74, causing friction against the inner wall of the sleeve 74; consequently, either the free ends of the elastic legs or the inner wall of the sleeve is subject to wear. In addition, if the force with which the sleeve 74 is pressed downward is applied unevenly, inconsistent deformation may take place even in the same pair of elastic legs 72, and in that case, the resulting elastic restoring force and hence the position restoration function will be impaired, too.

US 2011/121561 A1 discloses a quick coupling, comprising a main body of a hollow tubular shape, an elastic element and a sleeve, wherein the elastic element and the sleeve are mounted around the main body sequentially.

### BRIEF SUMMARY OF THE INVENTION

The primary objective of the present invention is to provide an improved quick coupling structure that can bring a sleeve in the structure back to its original position reliably and will not be easily damaged.

To achieve the foregoing objective, the present invention provides a quick coupling that includes a hollow tubular main body, an elastic element, and a sleeve, wherein the elastic element and the sleeve are mounted around the main body sequentially.

The main body has an outer periphery and an inner periphery. The inner periphery forms and surrounds a channel that extends along an axial centerline. The elastic element is annular, is mounted around the outer periphery of the main body, and has a plurality of supporting plates that are arranged at intervals. Each supporting plate has an elastically pressable section extending toward the axial centerline, and the distal end of each elastically pressable section abuts against an abutting portion of the outer periphery of the main body, with an elastic deformation space formed between each elastically pressable section and the outer periphery of the main body. The sleeve is mounted around the elastic element and has an inner wall provided with a plurality of pushing blocks that correspond respectively to the elastically pressable sections of the supporting plates. When the sleeve is pressed downward, each pushing block is pressed on the elastically pressable section of the corresponding supporting plate such that the elastically pressable sections of the supporting plates are elastically deformed and generate an elastic restoring force to bring the sleeve back to its original position rapidly.

### BRIEF DESCRIPTION OF THE SEVERAL VIEWS OF THE DRAWINGS

FIG. 1 is an exploded perspective view of an embodiment of the present invention;
FIG. 2 is a perspective view showing the elastic element of the embodiment in FIG. 1 mounted around the main body;
FIG. 3 is an assembled sectional perspective view of the embodiment in FIG. 1;
FIG. 4 is a sectional view of the embodiment in FIG. 1, showing a state in which the sleeve has yet to be pressed downward;
FIG. 5 is another sectional view of the embodiment in FIG. 1, showing a state in which the sleeve has been pressed downward;
FIG. 6 is a schematic structural diagram of a conventional quick coupling; and
FIG. 7 is a schematic structural diagram of another conventional quick coupling.

### DETAILED DESCRIPTION OF THE INVENTION

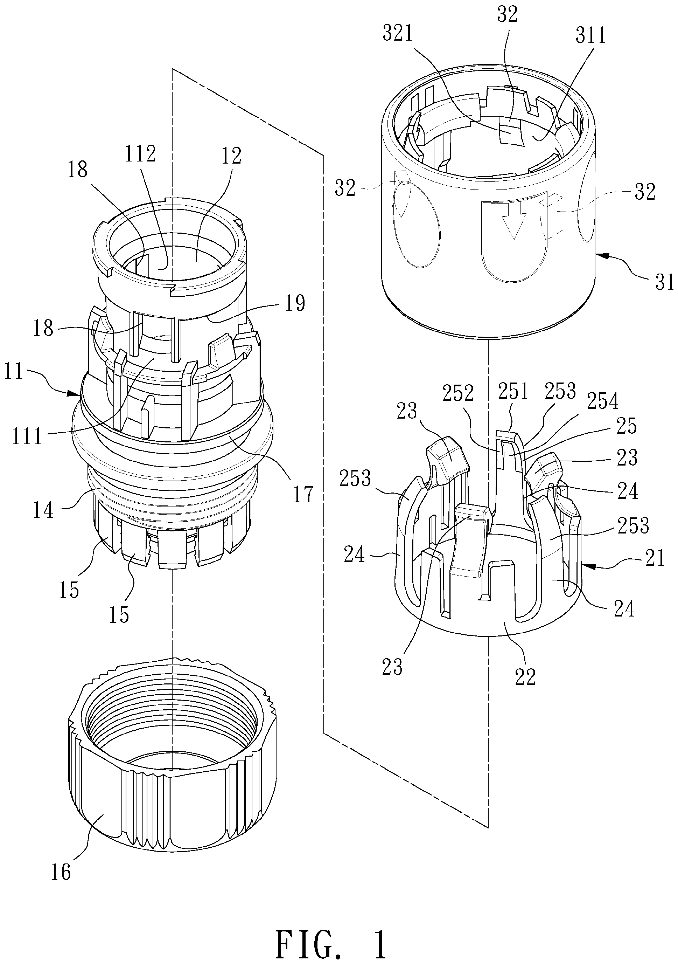

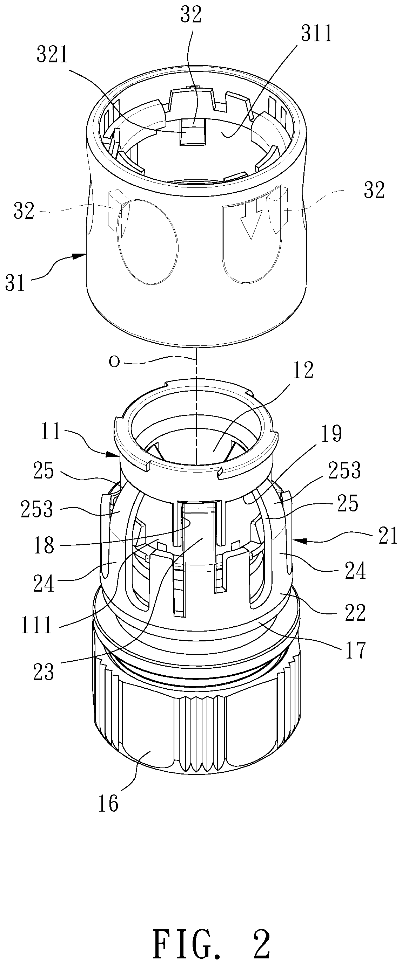

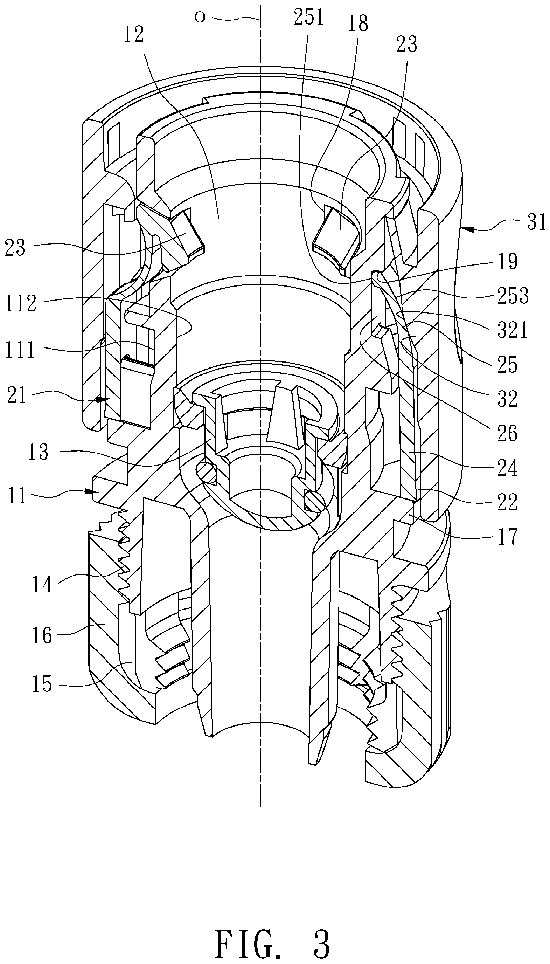

Referring to FIG. 1 to FIG. 3, an improved quick coupling structure according to an embodiment of the present invention is composed essentially of a main body 11, an elastic element 21, and a sleeve 31. The elastic element 21 and the sleeve 31 are mounted around the main body 11 sequentially.

The main body 11 is shaped as a hollow tube and has an outer periphery 111 and an inner periphery 112. The inner periphery 112 forms and surrounds a channel 12 that extends along an axial centerline O. The channel 12 is provided therein with a valve 13. One end of the main body 11 has an externally threaded section 14 and is circumferentially provided with a plurality of fastening teeth 15. The fastening teeth 15 are configured to work with a locking ring 16 in order to clamp a hose (not shown) tightly in position. The outer periphery of a middle section of the main body 11 is circumferentially provided with a supporting ledge 17, and a plurality of apertures 18 are formed in a portion of the main body 11 that lies above the supporting ledge 17.

The elastic element 21 is integrally formed of an elastic plastic material and has a hollow annular shape. The elastic element 21 has a bottom portion formed as an annular base 22. The elastic element 21, including the annular base 22, is mounted around the outer periphery 111 of the main body 11 such that the annular base 22 rests on the supporting ledge 17. The annular base 22 is circumferentially provided with a plurality of engaging blocks 23 and a plurality of supporting plates 24. The engaging blocks 23 extend upward from the annular base 22 and are configured to be engaged in the apertures 18 respectively. The supporting plates 24 alternate with the engaging blocks 23, extend upward from the annular base 22, and each have an elastically pressable section 25 that extends toward the axial centerline O. Each elastically pressable section 25 has a distal end 251 abutting against an abutting portion 19 of the outer periphery 111 of the main body 11. In this embodiment, the elastically pressable section 25 of each supporting plate 24 extends toward the axial centerline O in a curved manner; the abutting portion 19 is an annular groove provided in, and along the circumference of, the outer periphery 111 of the main body 11; and the distal end 251 of each elastically pressable section 25 is engaged with the edge of the upper end of the annular groove so as to be well supported. The inner side 254 of each elastically pressable section 25 (i.e., the side facing the axial centerline O) is protrudingly provided, and partially edged, with a generally inverted U-shaped raised portion 252 to effectively increase the structural strength and elasticity of the elastically pressable section 25. The side of each elastically pressable section 25 that faces away from the axial centerline O is a bearing side 253 curving toward the axial centerline O. Once the elastic element 21 is mounted around the main body 11, each elastically pressable section 25 and the outer periphery 111 of the main body 11 form an elastic deformation space 26 therebetween.

The sleeve 31 has a hollow tubular shape and is mounted around the outer periphery of the elastic element 21. The inner wall 311 of the sleeve 31 is circumferentially provided with a plurality of pushing blocks 32 that are vertically aligned with the elastically pressable sections 25 of the supporting plates 24 respectively. Each pushing block 32 has a curved pushing surface 321 projecting toward the corresponding elastically pressable section 25. Once the sleeve 31 is mounted around the outer periphery of the elastic element 21, the curved pushing surface 321 of each pushing block 32 abuts against the bearing side 253 of the corresponding elastically pressable section 25.

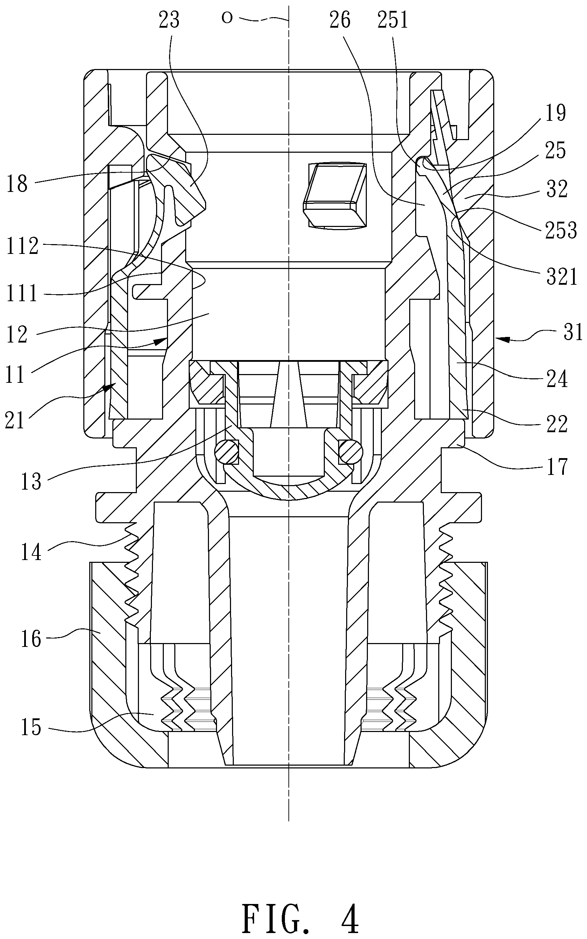

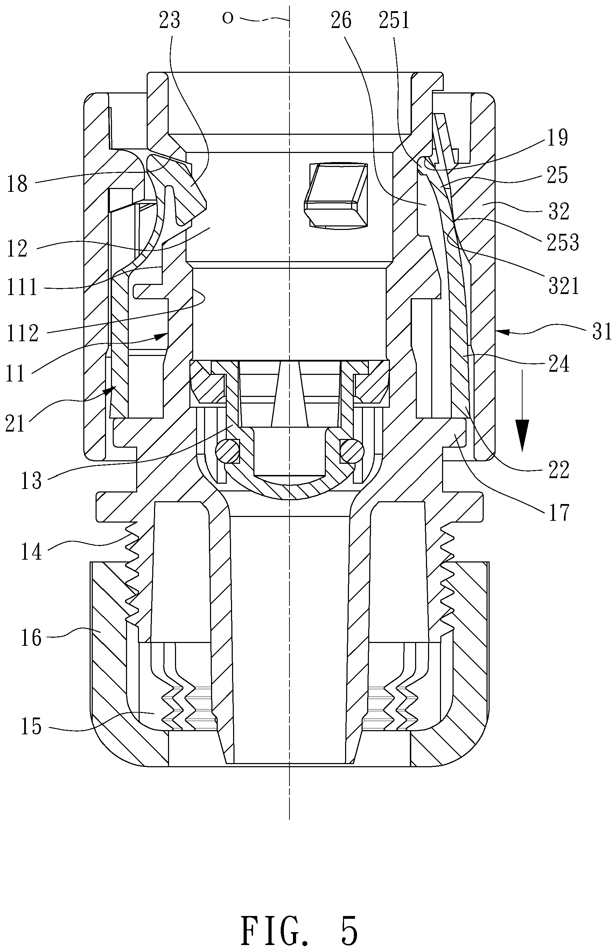

When the sleeve 31 is pressed downward by a user, referring to FIG. 4 and FIG. 5, the pressure applied by the curved pushing surface 321 of each pushing block 32 to the bearing side 253 of the corresponding elastically pressable section 25 is gradually increased, and the elastic deformation space 26 reserved between each elastically pressable section 25 and the outer periphery 111 of the main body 11 allows each elastically pressable section 25 to move and deform toward the axial centerline O due to the press of the corresponding pushing block 32 and thus generate an elastic restoring force to bring the sleeve 31 back to its original position rapidly.

The structures described above provide embodiments of the present invention with the following advantages:
1. The invention is structurally simple, can be assembled with ease, and therefore enables an effective reduction in cost.
2. The elastic element 21 is mounted around the outer periphery 111 of the main body 11 and rests on the supporting ledge 17, and the distal end 251 of the elastically pressable section 25 of each supporting plate 24 is engaged in the annular groove in the outer periphery 111 of the main body 11; thus, the two ends of each curved elastically pressable section 25 are effectively supported to not only allow the elastically pressable sections 25 to restore the sleeve 31 in position reliably, but also extend the service life of the elastically pressable sections 25 effectively by protecting the elastically pressable sections 25 from elastic fatigue after long-term use.
3. The curved pushing surface 321 of each pushing block 32 is pressed directly on the bearing side 253 of the corresponding elastically pressable section 25 such that the pressing force of each pushing block 32 is transmitted reliably to the corresponding elastically pressable section 25 without being dispersed. Moreover, both the curved pushing surfaces 321 and the bearing sides 253 are curved in design to provide effortlessness and ease of operation.
4. The distal ends 251 of the elastically pressable sections 25 of the supporting plates 24 are engaged in the annular groove in the outer periphery 111 of the main body 11 and therefore will not shift in position or wobble when the curved elastically pressable sections 25 are respectively pressed by the pushing blocks 32. This prevents wear between the distal ends of the elastically pressable sections 25 and the sleeve 31.

## Claims

1. A quick coupling, comprising a main body (11) of a hollow tubular shape, an elastic element (21), and a sleeve (31), wherein the elastic element (21) and the sleeve (31) are mounted around the main body (11) sequentially, wherein:
the main body (11) has an outer periphery (111) and an inner periphery (112), the inner periphery (112) forms and surrounds a channel (12) extending along an axial centerline (O), the elastic element (21) is annular and is mounted around the outer periphery (111), the elastic element (21) has a plurality of supporting plates (24) arranged at intervals, each said supporting plate (24) has an elastically pressable section (25) each said elastically pressable section (25) and the outer periphery (111) of the main body (11) form an elastic deformation space (26) therebetween, the sleeve (31) is mounted around the elastic element (21), the sleeve (31) has an inner wall (311) provided with a plurality of pushing blocks (32) corresponding respectively to the elastically pressable sections (25) of the supporting plates (24), and when the sleeve (31) is pressed downward, each said pushing block (32) is pressed on and thereby elastically deforms the elastically pressable section (25) of a corresponding said supporting plate (24) such that the elastically pressable section (25) of the corresponding supporting plate (24) generates an elastic restoring force to restore the sleeve (31) in position, the quick coupling being **characterized in that**:
each said elastically pressable section (25) of the supporting plates (24) extends toward the axial centerline (O) and has a distal end (251) abutting against an abutting portion (19) of the outer periphery (111) of the main body (11).

2. The quick coupling of claim 1, **characterized in that**: the elastically pressable section (25) of each said supporting plate (24) is curved toward the axial centerline (O).

3. The quick coupling of claim 1, **characterized in that**: each said elastically pressable section (25) has an inner side (254) facing the axial centerline (O) and protrudingly provided, and partially edged, with a generally inverted U-shaped raised portion (252).

4. The quick coupling of claim 1, **characterized in that**: each said elastically pressable section (25) has a side facing away from but curved toward the axial centerline (O) and serving as a bearing side (253), each said pushing block (32) has a curved pushing surface (321) projecting toward a corresponding said elastically pressable section (25), and when the sleeve (31) is mounted around an outer periphery of the elastic element (21), the curved pushing surface (321) of each said pushing block (32) abuts against the bearing side (253) of the corresponding elastically pressable section (25).

5. The quick coupling of claim 1, **characterized in that**: the outer periphery (111) of the main body (11) is circumferentially provided with a supporting ledge (17), the elastic element (21) has an annular base (22), the annular base (22) of the elastic element (21) is mounted around the outer periphery (111) of the main body (11) and rests on the supporting ledge (17), the abutting portion (19) is an annular groove provided in, and along a circumference of, the outer periphery (111) of the main body (11), and the distal end (251) of each said elastically pressable section (25) is engaged in the annular groove.

## Patentansprüche

1. Schnellkupplung, umfassend einen Hauptkörper (11) mit einer hohlen rohrförmigen Gestalt, ein elastisches Element (21) und eine Muffe (31), wobei das elastische Element (21) und die Muffe (31) sequentiell um den Hauptkörper (11) montiert sind, wobei
der Hauptkörper (11) einen äußeren Umfang (111) und einen inneren Umfang (112) aufweist, wobei der innere Umfang (112) einen Kanal (12) bildet und umgibt, der sich entlang einer axialen Mittellinie (O) erstreckt, das elastische Element (21) ringförmig ist und um den äußeren Umfang (111) montiert ist, das elastische Element (21) eine Vielzahl von Stützplatten (24) aufweist, die in Intervallen angeordnet sind, jede der Stützplatten (24) eine elastisch drückbare Sektion (25) aufweist, jede der elastisch drückbaren Sektionen (25) und der äußere Umfang (111) des Hauptkörpers (11) einen elastischen Verformungsraum (26) dazwischen bilden, die Muffe (31) um das elastische Element (21) montiert ist, die Muffe (31) eine innere Wand (311) aufweist, die mit einer Vielzahl von Schubblöcken (32) ausgestattet ist, die jeweils den elastisch drückbaren Sektionen (25) der Stützplatten (24) entsprechen, und wenn die Muffe (31) nach unten gedrückt ist, jeder Schubblock (32) weiter gedrückt und dabei die elastisch drückbare Sektion (25) einer Entsprechenden der Stützplatten (24) elastisch verformt, so dass die elastisch drückbare Sektion (25) der entsprechenden Stützplatte (24) eine elastisch Wiederherstellungskraft erzeugt, um die Muffe (31) wieder in ihre Position zu bringen, wobei die Schnellkupplung **dadurch gekennzeichnet ist, dass**:
sich jede der elastisch drückbaren Sektionen (25) der Stützplatten (24) hin zur axialen Mittellinie (O) erstreckt und ein distales Ende (251) aufweist, das gegen einen Anschlagabschnitt (19) des äußeren Umfangs (111) des Hauptkörpers (11) anschlägt.

2. Schnellkupplung nach Anspruch 1, **dadurch gekennzeichnet, dass**: die elastisch drückbare Sektion (25) jeder der Stützplatten (24) hin zur axialen Mittellinie (O) gekrümmt ist.

3. Schnellkupplung nach Anspruch 1, **dadurch gekennzeichnet, dass**: jede der elastisch drückbaren Sektionen (25) eine innere Seite (254) aufweist, die der axialen Mittellinie (O) gegenüberliegt und vorspringend bereitgestellt ist und teilweise mit einem im Allgemeinen umgekehrten U-förmig angehobenen Abschnitt (252) umrandet ist.

4. Schnellkupplung nach Anspruch 1, **dadurch gekennzeichnet, dass**: jede der elastisch drückbaren Sektionen (25) eine Seite aufweist, die weg von der axialen Mittellinie (O) angeordnet, jedoch hin zur dieser gekrümmt ist und als eine tragende Seite (253) dient, wobei jeder Schubblock (32) eine gekrümmte Schubseite (321) aufweist, die hin zu einem entsprechenden der elastisch drückbaren Abschnitte (25) vorspringt, und wenn die Muffe (31) um einen äußeren Umfang des elastischen Elements (21) montiert ist, die gekrümmte Schubfläche (321) jedes der Schubblöcke (32) gegen die tragende Seite (253) der entsprechenden elastisch drückbaren Sektion (25) anstößt.

5. Schnellkupplung nach Anspruch 1, **dadurch gekennzeichnet, dass**: der äußere Umfang (111) des Hauptkörpers (11) umfänglich mit einer Stützleiste (17) ausgestattet ist, das elastische Element (21) eine ringförmige Basis (22) aufweist, die ringförmige Basis (22) des elastischen Elements (21) um den äußeren Umfang (111) des Hauptkörpers (11) montiert ist und auf der Stützleiste (17) ruht, der Anschlagsabschnitt (19) eine ringförmige Nut ist, die in dem und entlang einer Kreislinie des äußeren Umfangs (111) des Hauptkörpers (11) bereitgestellt ist, und das distale Ende (251) des elastisch drückbaren Abschnitts (25) in der ringförmigen Nut eingegriffen ist.

## Revendications

1. Raccord rapide, comprenant un corps principal (11) d'une forme tubulaire creuse, un élément élastique (21) et un manchon (31), l'élément élastique (21) et le manchon (31) étant montés autour du corps principal (11) de manière séquentielle, dans lequel :
le corps principal (11) a une périphérie externe (111) et une périphérie interne (112), la périphérie interne (112) forme et entoure un canal (12) s'étendant le long d'un axe longitudinal (O), l'élément élastique (21) est annulaire et est monté autour de la périphérie externe (111), l'élément élastique (21) a une pluralité de plaques de support (24) disposées à intervalles, chaque plaque de support (24) précitée a une section pouvant être pressée élastiquement (25), chaque section pouvant être pressée élastiquement (25) précitée et la périphérie externe (111) du corps principal (11) forment un espace de déformation élastique (26) entre elles, le manchon (31) est monté autour de l'élément élastique (21), le manchon (31) a une paroi interne (311) comportant une pluralité de blocs de poussée (32) correspondant respectivement aux sections pouvant être pressées élastiquement (25) des plaques de support (24), et, lorsque le manchon (31) est pressé vers le bas, chaque bloc de poussée (32) précité est enfoncé et, de ce fait, déforme élastiquement la section pouvant être pressée élastiquement (25) d'une plaque de support correspondante (24) précitée, de telle sorte que la section pouvant être pressée élastiquement (25) de la plaque de support correspondante (24) génère une force de rappel élastique pour ramener le manchon (31) en position, le raccord rapide étant **caractérisé par le fait que** :
chaque section pouvant être pressée élastiquement (25) précitée des plaques de support (24) s'étend vers l'axe longitudinal (O) et a une extrémité distale (251) en butée contre une partie de butée (19) de la périphérie externe (111) du corps principal (11).

2. Raccord rapide selon la revendication 1, **caractérisé par le fait que** : la section pouvant être pressée élastiquement (25) de chaque plaque de support (24) précitée est incurvée vers l'axe longitudinal (O).

3. Raccord rapide selon la revendication 1, **caractérisé par le fait que** : chaque section pouvant être pressée élastiquement (25) précitée a un côté interne (254) faisant face à l'axe longitudinal (O) et comportant, en saillie et partiellement à bords, une partie surélevée généralement en forme de U inversé (252).

4. Raccord rapide selon la revendication 1, **caractérisé par le fait que** : chaque section pouvant être pressée élastiquement (25) précitée a un côté tourné à l'opposé de l'axe longitudinal (O) mais incurvé vers celui-ci et servant de côté d'appui (253), chaque bloc de poussée (32) précité a une surface de poussée incurvée (321) se projetant vers une section pouvant être pressée élastiquement correspondante (25) précitée, et, lorsque le manchon (31) est monté autour d'une périphérie externe de l'élément élastique (21), la surface de poussée incurvée (321) de chaque bloc de poussée (32) précité est en butée contre le côté d'appui (253) de la section pouvant être pressée élastiquement correspondante (25).

5. Raccord rapide selon la revendication 1, **caractérisé par le fait que** : la périphérie externe (111) du corps principal (11) comporte, de manière circonférentielle, un rebord de support (17), l'élément élastique (21) a une base annulaire (22), la base annulaire (22) de l'élément élastique (21) est montée autour de la périphérie externe (111) du corps principal (11) et repose sur le rebord de support (17), la partie de butée (19) est une rainure annulaire prévue dans la périphérie externe (111) du corps principal (11) et le long d'une circonférence de celle-ci, et l'extrémité distale (251) de chaque section pouvant être pressée élastiquement (25) précitée est engagée dans la rainure annulaire.
